# EUROPEAN PATENT APPLICATION

(11) **EP 4 645 426 A1**
(43) Date of publication of application: **05.11.2025**
(21) Application number: 25168367.8
(22) Date of filing: 03.04.2025
(51) Int. Cl.: H01M 4/131, H01M 4/36, H01M 4/505, H01M 4/525, H01M 4/58, H01M 10/0525, H01M 4/02

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(30) Priority: 25.04.2024 KR 20240055142
(71) Applicant: SAMSUNG SDI CO., LTD., Yongin-si, Gyeonggi-do 17084 (KR)
(72) Inventor: KIM, Young-Ki, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Marks & Clerk LLP

(57) **Abstract**

A positive electrode active material for a rechargeable lithium battery, a positive electrode including the positive electrode active material, and a rechargeable lithium battery including the positive electrode are disclosed. For example, the positive electrode active material includes first particles including a compound of Chemical Formula 1 and second particles including a compound of Chemical Formula 2. The content (e.g., amount) of the first particles is greater than the content (e.g., amount) of the second particles, and the second particles are (e.g., be in) a single particle form.

## Description

### BACKGROUND

### 1. Field

One or more embodiments of the present disclosure relate to a positive electrode active material for a rechargeable lithium battery, a positive electrode including the positive electrode active material, and a rechargeable lithium battery including the positive electrode. For example, one or more embodiments of the present disclosure relate to a positive electrode active material including an olivine-based lithium compound, a positive electrode including the positive electrode active material, and a rechargeable lithium battery including the positive electrode.

### 2. Description of the Related Art

Recently, with the rapid proliferation (spread) of electronic devices that use batteries (such as mobile phones, laptop computers, and/or the like) and/or electric vehicles, the demand for rechargeable batteries with relatively high energy density and high capacity (e.g., electrical capacity) is rapidly increasing. Accordingly, research and development to improve or enhance the performance of rechargeable lithium batteries is being actively pursued or conducted.

A rechargeable lithium battery includes a positive electrode and a negative electrode containing active materials capable of intercalation and deintercalation of lithium ions, with an electrolyte. The battery produces electrical energy through the oxidation and reduction reactions if (e.g., when) lithium ions are intercalated into and deintercalated from the positive electrode and the negative electrode.

### SUMMARY

One or more aspects of embodiments of the present disclosure are directed toward a positive electrode active material that has high energy density, high operating voltage, and high conductivity (e.g., electrical conductivity).

One or more aspects of embodiments of the present disclosure are directed toward a rechargeable lithium battery that has high energy density, high operating voltage, and excellent (desired) low-temperature properties (e.g., electrical properties).

Additional aspects of embodiments will be set forth in part in the description which follows and, in part, will be apparent from the description or may be learned by practice of the presented embodiments of the disclosure.

According to one or more embodiments of the present disclosure, a positive electrode active material includes first particles including a compound of Chemical Formula 1 and second particles including a compound of Chemical Formula 2. The content (e.g., amount) of the first particles is greater than the content (e.g., amount) of the second particles, and the second particles have (e.g., be in) a single particle form.

Chemical Formula 1 Liₐ₁Mnₓ₁Fe_{y1}B_{z1}PO_{4-c1}

In Chemical Formula 1, 0.8≤a1≤1.2, 0.3≤x1≤0.7, 0.3≤y1≤0.7, 0≤z1≤0.05, 0≤c1≤0.05, x1 + y1 + z1 = 1, and B is at least one element selected from the group consisting of titanium (Ti), magnesium (Mg), and vanadium (V).

Chemical Formula 2 Liₐ₂Niₓ₂Mn_{y2}C_{z2}O_{c2}

In Chemical Formula 2, 1.1<a2≤1.6, 0.2≤x2≤0.5, 0.5≤y2≤0.8, 0≤z2≤0.05, 2≤c2≤2.3, x2 + y2 + z2 = 1, and C is at least one element selected from the group consisting of transition metals having an oxidation number of 4.

According to one or more embodiments of the present disclosure, a positive electrode for a rechargeable lithium battery includes a positive electrode current collector and a positive electrode active material layer on the positive electrode current collector. The positive electrode active material layer includes the positive electrode active material, a conductive (e.g., electrically conductive) material (e.g., electron conductor), and a binder.

According to one or more embodiments of the present disclosure, a rechargeable lithium battery may include the positive electrode, a negative electrode including a negative electrode current collector and a negative electrode active material layer on the negative electrode current collector, and a separator between the positive electrode and the negative electrode.

At least some of the above and other features of the invention are set out in the claims.

### BRIEF DESCRIPTION OF THE DRAWINGS

The accompanying drawings are included to provide a further understanding of embodiments of the subject matter of the present disclosure and are incorporated in and constitute a part of this specification. The drawings illustrate embodiments of the subject matter of the present disclosure and, together with the description, serve to explain principles of embodiments of the subject matter of the present disclosure.
FIG. 1 is a simplified conceptual diagram illustrating a rechargeable lithium battery according to one or more embodiments of the present disclosure.
FIGS. 2 to 5 are schematic views illustrating rechargeable lithium batteries according to one or more embodiments of the present disclosure.
FIGS. 6 and 7 are enlarged views illustrating positive electrode active material layers of a rechargeable lithium battery according to one or more embodiments of the present disclosure.
FIG. 8 is a flowchart illustrating a method for preparing a positive electrode active material according to one or more embodiments of the present disclosure.
FIGS. 9A and 9B are scanning electron microscope (SEM) images illustrating a positive electrode active material of Preparation Example 1 of the present disclosure.
FIGS. 9C and 9D are scanning electron microscope (SEM) images illustrating a positive electrode active material of Preparation Example 2 of the present disclosure.
FIGS. 10A and 10B are scanning electron microscope (SEM) images illustrating a positive electrode active material of Preparation Example 3 of the present disclosure.

### DETAILED DESCRIPTION

In order to fully understand the aspects and features of the present disclosure, the subject matter of the present disclosure will be described in more detail with reference to the accompanying drawings. The subject matter of the present disclosure may, however, be embodied in one or more suitable forms and should not be construed as being limited to one or more embodiments set forth herein, and one or more suitable changes and modifications can be made. Rather, these embodiments are provided so that this disclosure will be thorough and complete and will fully convey the aspects and features of the present disclosure to those skilled in the art to which the present disclosure pertains.

In the present disclosure, it will be understood that if (e.g., when) an element, such as a layer, a film, a region, or a substrate, is referred to as being "on" another element, the element may be directly on the other element or intervening elements may be present therebetween. In contrast, if (e.g., when) an element is referred to as being "directly on" another element, no intervening elements are present therebetween.

In the drawings, the thicknesses of components (e.g., layers, films, panels, regions, and/or the like) may be exaggerated for clarity and to effectively illustrate the technical contents. Like reference numerals and/or symbols refer to like elements throughout the specification, and duplicative descriptions thereof may not be provided throughout the specification.

The singular forms "a," "an," and "the" are intended to include the plural forms as well, unless the context clearly indicates otherwise. In one or more embodiments, unless otherwise noted, the phrases "A or B" and "A and/or B" may refer to "A but not B", "B but not A", or "A and B". The terms "has/includes" and/or "having/including" used in the present disclosure do not exclude the presence or addition of one or more other components.

In the present disclosure, "combination thereof" may refer to a mixture, a stack, a composite, a copolymer, an alloy, a blend, a reaction product, and/or the like of constituents.

Unless otherwise defined in the present disclosure, a particle diameter may be an average particle diameter. Also, the particle diameter may refer to an average particle diameter (D50) which refers to a diameter of particles at a cumulative volume of about 50 vol% in a particle size distribution. The average particle diameter (D50) may be measured by any suitable methods that are generally available to or generally used by those skilled in the art, for example, by a particle size analyzer, and/or may also be measured by using a transmission electron microscope (TEM) image and/or a scanning electron microscope (SEM) image. As used herein, if (e.g., when) a definition is not otherwise provided, the average particle diameter refers to a diameter (D50) of particles having a cumulative volume of 50 volume% in the particle size distribution that is obtained by measuring the size (e.g., diameter or major axis length) of about 20 particles at random in a scanning electron microscope (SEM) image. In one or more embodiments, the average particle diameter may be measured by a measurement device using dynamic light-scattering (DLS), wherein the number of particles is counted for each particle size range by performing data analysis, and an average particle diameter (D50) value may then be obtained by calculation therefrom. Also, the average particle diameter may be measured by using a laser diffraction method. If (e.g., when) measured by the laser diffraction method, for example, after dispersing particles to be measured in a dispersion medium, the dispersion medium may be introduced into a laser diffraction particle size measurement instrument that is generally available to or generally used by those skilled in the art (e.g., Micro-Trak MT-3000^{™}) and irradiated with ultrasonic waves of about 28 kHz at an output of about 60 W, and the average particle diameter (D50) based on about 50% of particle size distribution in the measurement instrument may then be calculated. In one or more embodiments, if (e.g., when) particles are spherical (e.g., substantially spherical), "diameter" or "size" refers to a particle diameter, and if (e.g., when) the particles are non-spherical, the "diameter" or "size" refers to a major axis length.

It will be understood that, although the terms "first," "second," and/or the like may be used herein to describe one or more elements, these elements should not be limited by these terms. These terms are only used to distinguish one element from another element. Thus, a first element may be termed a second element without departing from the scope of the present disclosure. Similarly, a second element may be termed a first element.

As used herein, the terms "use," "using," and "used" may be considered synonymous with the terms "utilize," "utilizing," and "utilized," respectively.

As used herein, expressions, such as "at least one of," "one of," and "selected from," if (e.g., when) preceding a list of elements, modify the entire list of elements and do not modify the individual elements of the list. For example, "at least one selected from among a, b, and c," "at least one of a, b, or c," and "at least one of a, b, and/or c" may refer to only a, only b, only c, both (e.g., simultaneously) a and b, both (e.g., simultaneously) a and c, both (e.g., simultaneously) b and c, all of a, b, and c, or variations thereof.

Further, the use of "may" if (e.g., when) describing embodiments of the present disclosure refers to "one or more embodiments of the present disclosure."

Spatially relative terms, such as "beneath," "below," "lower," "above," "upper," "bottom," "top," and/or the like, may be used herein for ease of description to describe a relationship of one element or feature to another element(s) or feature(s) as illustrated in the figures. It will be understood that the spatially relative terms are intended to encompass substantially different orientations of the device in use or operation in addition to the orientation illustrated in the figures. For example, if (e.g., when) the device in the figures is turned over, elements described as "below" or "beneath" other elements or features may then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

As used herein, the terms "substantially," "about," and similar terms are used as terms of approximation and not as terms of degree and are intended to account for the inherent deviations in measured or calculated values that would be recognized by those of ordinary skill in the art. "About" or "approximately," as used herein, is inclusive of the stated value and refers to being within an acceptable range of deviation for the particular value as determined by one of ordinary skill in the art, considering the measurement in question and the error associated with measurement of the particular quantity (e.g., the limitations of the measurement system). For example, "about" may refer to being within one or more standard deviations or within ±30%, ±20%, ±10%, or ±5% of the stated value.

Any numerical range recited herein is intended to include all sub-ranges of substantially the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in the present disclosure is intended to include all higher numerical limitations subsumed therein.

A person of ordinary skill in the art would appreciate, in view of the present disclosure in its entirety, that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

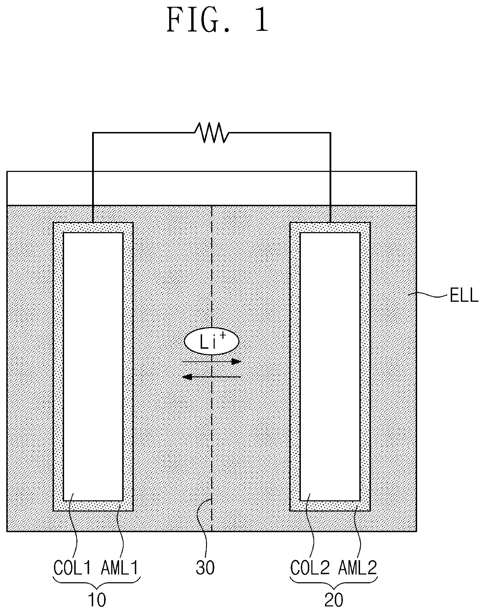

FIG. 1 is a simplified conceptual diagram illustrating a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in/with the electrolyte solution ELL.

The electrolyte solution ELL may be a medium to transfer lithium ions between the positive electrode 10 and the negative electrode 20. In the electrolyte solution ELL, the lithium ions may move through the separator 30 toward the positive electrode 10 or the negative electrode 20.

### Positive Electrode 10

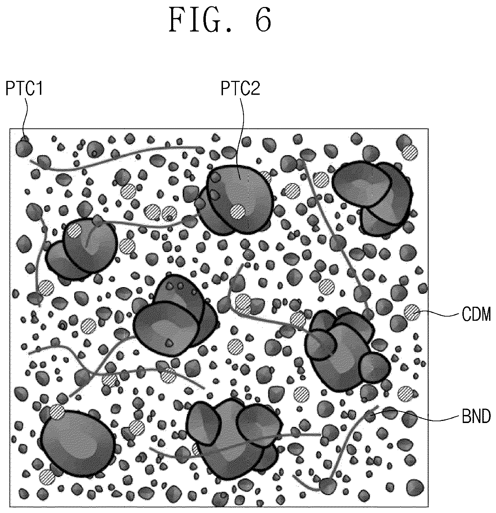

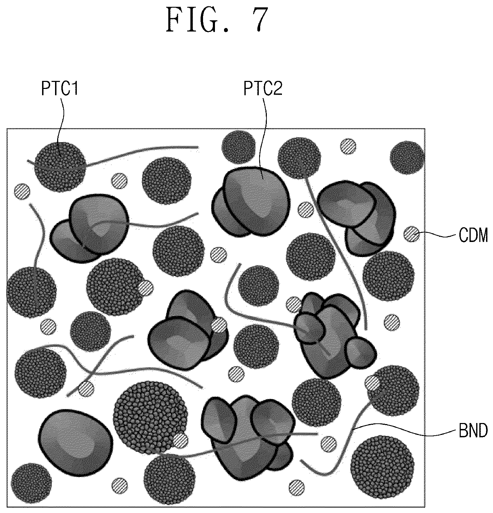

The positive electrode 10 for a rechargeable lithium battery includes a current collector COL1 and a positive electrode active material layer AML1 on the current collector COL1. The positive electrode active material layer AML1 includes a positive electrode active material and further includes a binder and a conductive (e.g., electrically conductive) material (e.g., an electron conductor). The positive electrode active material layer AML1 according to one or more embodiments of the present disclosure will be described in more detail with reference to FIGS. 6 and 7. Aluminium (Al) may be used as the current collector COL1, but embodiments of the present disclosure are not limited thereto.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive (e.g. electrically conductive) material (e.g., an electron conductor).

For example, the negative electrode active material layer AML2 may include about 90 wt% to about 99 wt% of the negative electrode active material, about 0.5 wt% to about 5 wt% of the binder, and about 0 wt% to about 5 wt% of the conductive (e.g., electrically conductive) material.

The binder may act or serve to attach the negative electrode active material particles well or suitably to each other and also to attach the negative electrode active material well or suitably to the current collector COL2. The binder may include a non-aqueous (e.g., water-insoluble) binder, an aqueous (e.g., water-soluble) binder, a dry (e.g., substantially dry) binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous (e.g., water-soluble) binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of imparting or increasing viscosity may further be included. The cellulose-based compound may include at least one selected from among carboxymethyl cellulose, hydroxypropyl methylcellulose, methyl cellulose, or an alkali metal salt thereof. The alkali metal may include sodium (Na), potassium (K), and/or lithium (Li).

The dry binder may be a polymer material that is capable of being fibrous (e.g., that is processable to be fibrous). For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive (e.g., electrically conductive) material may be used to impart or cause conductivity (e.g. electrical conductivity) to the electrode. Any suitable material that does not cause chemical change (e.g. does not cause any undesirable chemical change in the rechargeable lithium battery) and that conducts electrons may be used in the rechargeable lithium battery. Non-limiting examples thereof may include a carbon-based material, such as natural graphite, artificial graphite, carbon black, acetylene black, Ketjen black, a carbon fiber, a carbon nanofiber, a carbon nanotube, and/or the like; a metal-based material including copper, nickel, aluminium, silver, and/or the like in a form of a metal powder and/or a metal fiber; a conductive (e.g., electrically conductive) polymer, such as polyphenylene and/or a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive (e.g., electrically conductive) metal, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous (e.g., non-crystalline) carbon, and/or a (e.g., any suitable) combination thereof. The crystalline carbon may be graphite, such as non-shaped (e.g., randomly shaped), sheet-shaped (e.g., substantially sheet-shaped), flake-shaped (e.g., substantially flake-shaped), sphere-shaped (e.g., substantially sphere-shaped), and/or fiber-shaped (e.g., substantially fiber-shaped) natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOx (0 < x ≤ 2), a Si-Q alloy (where Q may be selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, SnOy (0 < y ≤ 2), e.g., SnO₂, a Sn-based alloy, and/or a (e.g., any suitable) combination thereof.

The silicon-carbon composite may be a composite of silicon and amorphous (e.g., non-crystalline) carbon. According to one or more embodiments, the silicon-carbon composite may be in a form of silicon particles and amorphous (e.g., non-crystalline) carbon coated on the surface of the silicon particles. For example, the silicon-carbon composite may include a secondary particle (core) in which primary silicon particles are assembled (agglomerated) and an amorphous (e.g., non-crystalline) carbon coating layer (shell) on the surface of the secondary particle. The amorphous (e.g., non-crystalline) carbon may also be between the primary silicon particles, and, for example, the primary silicon particles may be coated with the amorphous (e.g., non-crystalline) carbon. The secondary particle may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on a surface of the core.

The Si-based negative electrode active material and/or the Sn-based negative electrode active material may be used in combination with a carbon-based negative electrode active material.

### Separator 30

Depending on the type or kind of the rechargeable lithium battery, the separator 30 may be between the positive electrode 10 and the negative electrode 20. The separator 30 may include polyethylene, polypropylene, polyvinylidene fluoride, and/or a multilayer film of two or more layers thereof, and a mixed multilayer film may be a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one surface or both surfaces (e.g., two opposite (opposite facing) surfaces) of the porous substrate.

The porous substrate may be a polymer film of any one selected from among polyolefin, such as polyethylene and/or polypropylene, polyester, such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (Teflon^{™}), and/or a copolymer and/or a (e.g., any suitable) mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but embodiments of the present disclosure are not limited thereto.

The organic material and the inorganic material may be mixed in one coating layer, and/or a coating layer including an organic material and/or a coating layer including an inorganic material may be stacked.

### Electrolyte Solution ELL

The electrolyte solution ELL for a rechargeable lithium battery may include a non-aqueous (e.g., water-insoluble) organic solvent and a lithium salt.

The non-aqueous (e.g., water-insoluble) organic solvent may act or serve as a medium to transmit ions taking part in the electrochemical reaction of a rechargeable lithium battery.

The non-aqueous (e.g., water-insoluble) organic solvent may be a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, or an ether bond), and/or the like; amides, such as dimethylformamide; dioxolanes, such as 1,3-dioxolane, 1,4-dioxolane, and/or the like; sulfolanes, and/or the like.

The non-aqueous (e.g., water-insoluble) organic solvents may be used alone or in combination of two or more.

In one or more embodiments, if (e.g., when) a carbonate-based solvent is used, a cyclic carbonate and a chain (e.g., non-cyclic) carbonate may be mixed and used, and the cyclic carbonate and the chain (e.g., non-cyclic) carbonate may be mixed in a volume ratio of about 1:1 to about 1:9.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y each may be integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

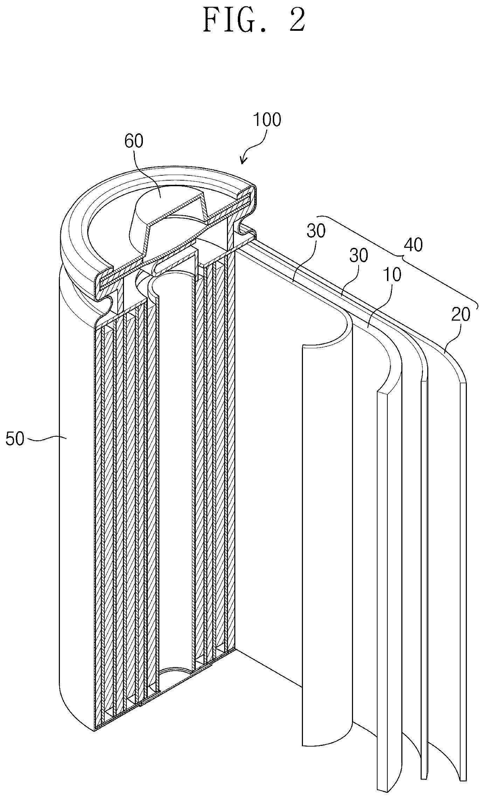

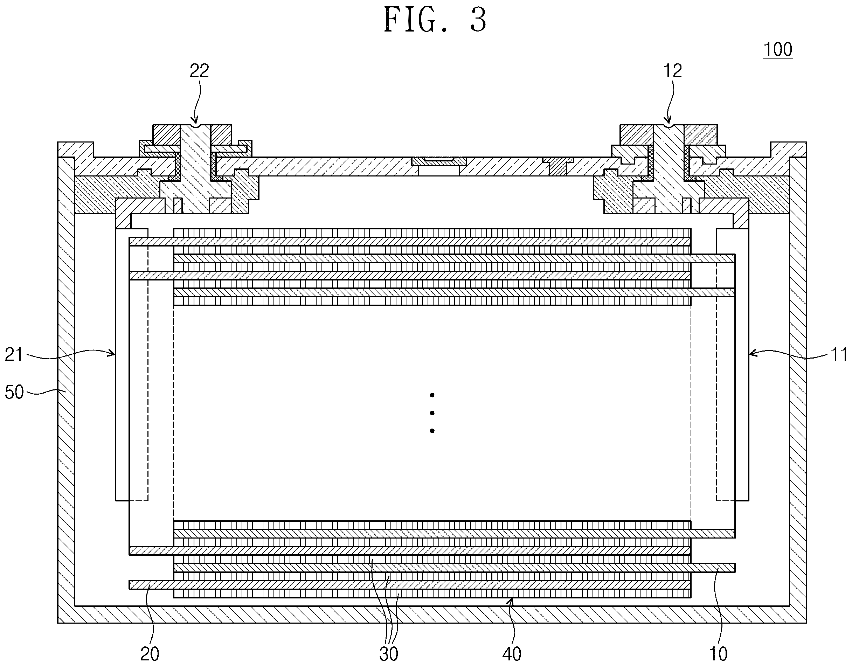

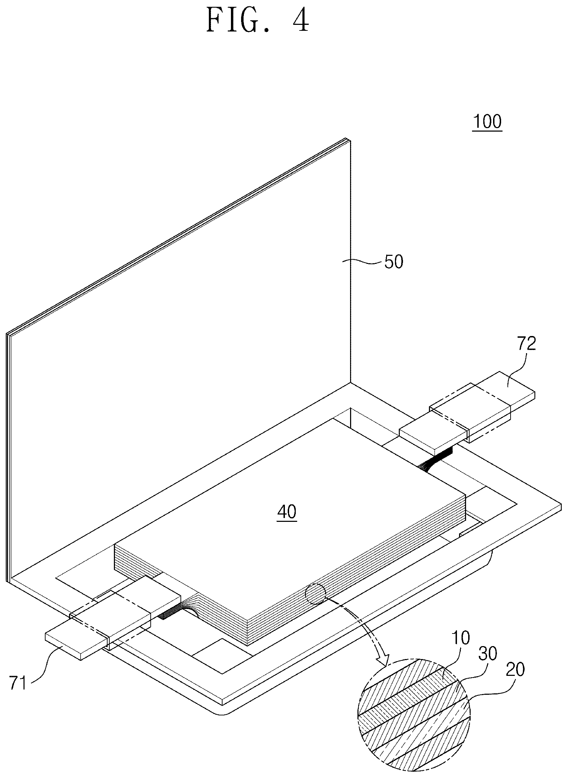

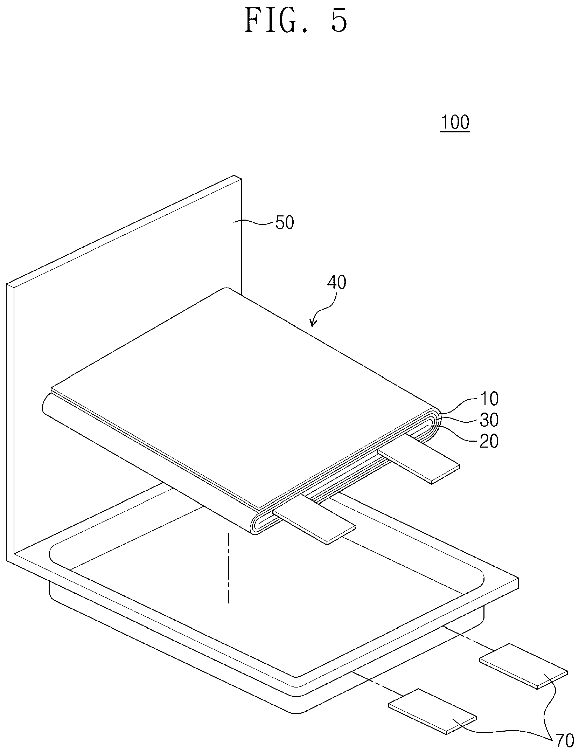

The rechargeable lithium battery may be classified into cylindrical, prismatic, pouch, or coin-type or -kind batteries and/or the like depending on their shape. FIGS. 2 to 5 are schematic views illustrating a rechargeable lithium battery according to one or more embodiments. FIG. 2 illustrates a cylindrical battery, FIG. 3 illustrates a prismatic battery, and FIGS. 4 and 5 illustrate pouch-type or -kind batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated in/with an electrolyte solution. The rechargeable lithium battery 100 may include a sealing member 60 that seals the case 50, as illustrated in FIG. 2. In FIG. 3, the rechargeable lithium battery 100 may include a positive lead tab 11, a positive terminal 12, a negative lead tab 21, and a negative terminal 22. As illustrated in FIGS. 4 and 5, the rechargeable lithium battery 100 may include an electrode tab 70, which may be, for example, a positive electrode tab 71 and a negative electrode tab 72 that act or serve as an electrical path to induce the current in the electrode assembly 40 to the outside.

The rechargeable lithium battery according to one or more embodiments may be applied to automobiles, mobile phones, and/or one or more suitable types or kinds of electric devices, as non-limiting examples.

FIGS. 6 and 7 are enlarged views of positive electrode active material layers of a rechargeable lithium battery according to one or more embodiments of the present disclosure. Referring to FIGS. 6 and 7, a positive electrode active material layer AML1 (see FIG. 1) includes a first particle PTC1, a second particle PTC2, a conductive material CDM, and a binder BND. A plurality of first particles PTC1 and a plurality of second particles PTC2 constitute a positive electrode active material according to one or more embodiments of the present disclosure.

The positive electrode active material layer AML1 may further include an additive that may act or serve as a sacrificial positive electrode.

The content (e.g., amount) of the positive electrode active material (e.g., PTC1 and PTC2) in the positive electrode active material layer AML1 may range from about 90 wt% to about 99 wt% relative to (e.g., based on) 100 wt% of the positive electrode active material layer AML1. Each of the contents (e.g., amounts) of the binder BND and the conductive material (e.g., electron conductor) CDM may be about 0.5 wt% to about 5 wt% relative to (e.g., based on) 100 wt% of the positive electrode active material layer AML1.

The binder BND may combine the first particles PTC1, the second particles PTC2, and the conductive material CDM with each other (or may couple the first particles PTC1, the second particles PTC2, and the conductive material CDM to each other). For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve or enhance conductivity (e.g., electrical conductivity) of the positive electrode active material layer AML1. Any suitable conductive (e.g., electrically conductive) material that does not cause a chemical change (e.g., an undesirable chemical change) of the positive electrode active material layer AML1 may be used without limitation as the conductive material CDM. For example, the conductive material CDM may include: a carbon-based material, such as natural graphite, artificial graphite, carbon black, acetylene black, Ketjen black, carbon fiber, carbon nano-fiber, and/or carbon nano-tube; a metal-based material containing copper, nickel, aluminium, silver, and/or the like and having a metal powder and/or a metal fiber form; a conductive (e.g., electrically conductive) polymer, such as polyphenylene and/or a polyphenylene derivative; and/or a (e.g., any suitable) mixture thereof.

Hereinafter, each of the first particle PTC1 and the second particle PTC2 will be illustrated in more detail.

### First Particle PTC1

The first particle PTC1 may include a lithium compound having an olivine structure, represented by Chemical Formula 1.

Chemical Formula 1 Liₐ₁Mnₓ₁Fe_{y1}B_{z1}PO_{4-c1}

In Chemical Formula 1, 0.8≤a1≤1.2, 0.3≤x1≤0.7, 0.3≤y1≤0.7, 0≤z1≤0.05 (e.g., 0.001≤z1≤0.05), 0≤c1≤0.05, and x1 + y1 + z1 = 1 are satisfied. B is at least one element selected from the group consisting of titanium (Ti), magnesium (Mg), and vanadium (V) and may be a dopant doped in the first particle PTC1. The dopant B may control the size of primary particles uniformly (e.g., substantially uniformly) and thus may improve or enhance the charge and discharge efficiency, low-temperature properties (e.g., electrical properties), and lifetime characteristics of a rechargeable lithium battery.

In one or more embodiments, the first particle PTC1 may include a coating layer on the surface of the first particle PTC1. The coating layer may cover the entire (e.g., substantially entire) surface of the first particle PTC1 or may cover a portion of the surface of the first particle PTC1. For example, the coating layer may include carbon and/or a carbon-containing compound. The first particle PTC1 may have improved or enhanced structural stability and electrical conductivity due to the coating layer.

The coating layer may further include at least one selected from the group consisting of a titanium-containing compound, a magnesium-containing compound, and/or a vanadium-containing compound. The metal-containing compound, such as the titanium-containing compound, the magnesium-containing compound, and/or the vanadium-containing compound, may be, for example, a metal oxide, a metal hydroxide, a metal carbonate, a synthesized compound thereof, and/or a (e.g., any suitable) mixture thereof. The metal-containing compound may further include other suitable metal and/or non-metal elements. For example, the metal-containing compound may further include lithium.

The first particle PTC1 may further include carbon derived from the coating layer. The carbon content (e.g., amount) in the first particle PTC1 may be about 0.5 wt% to about 10 wt%, about 1 wt% to about 3 wt%, or about 1.5 wt% to about 2.5 wt%.

In one or more embodiments, referring to FIG. 6, the first particle PTC1 may have (e.g., be in) a single particle form (e.g., each being a monolithic particle). In one or more embodiments, the single particle may refer to a sole particle that does not have a grain boundary inside. The single particle may have a morphology phase and may refer to a single particle, a monolith structure, a monolithic structure, and/or a non-agglomerated or non-aggregated particle in which the particles exist as an independent phase that are not agglomerated or not aggregated. For example, the single particle may be a single crystal. In one or more embodiments, the single particle may be a particle containing one or more crystals. The single particle may be a solely separated form. In one or more embodiments, the single particle may be in a form of 2 to 100 single particles attached to or coupled to each other.

The first particle PTC1 may be a positive electrode active material of a nano type (kind) (e.g., in the nanometer (nm) scale). The first particle PTC1 may include at least one first primary particle (e.g., be at least one first primary particle or just one first primary particle). In one or more embodiments, as discussed below, the first particle PTC1 may have a spherical (e.g., substantially spherical) or elliptical (e.g., substantially elliptical) shape, in which first primary particles are agglomerated. In one or more embodiments, though the first primary particles agglomerate, the first particle PTC1 may not have a spherical (e.g., substantially spherical) shape but may have a random (e.g., amorphous) shape.

The first particles PTC1 may be provided in one or more suitable sizes. For example, the average particle diameter of the first particles PTC1 may be about 500 nm to about 2.5 µm, or, for example, about 1 µm. The minimum particle diameter of the first particles PTC1, for example, the size of the first primary particles, may be about 100 nm to about 500 nm or about 100 nm to about 200 nm.

In one or more embodiments, the average particle diameter may be measured by a particle size analyzer. The average particle diameter may refer to the diameter of particles at an accumulated volume of about 50 vol% (D50) in particle size distribution.

In one or more embodiments, the minimum particle diameter, for example, the size of the first primary particles, may refer to a diameter measured by randomly selecting about 30 primary particles on an electron microscope image of the first particles PTC1.

In one or more embodiments, referring to FIG. 7, the first particle PTC1 may have a polycrystal form and may include (e.g., may each be) a secondary particle in which at least two or more first primary particles are agglomerated. For example, one first particle PTC1 may include a plurality of first primary particles that are agglomerated with each other. The first particle PTC1 may have a spherical (e.g., substantially spherical) or elliptical (e.g., substantially elliptical) shape.

In one or more embodiments, the first particle PTC1 may further include a grain boundary coating layer on the surface of each of the first primary particles. The grain boundary coating layer may be present in the first particle PTC1. The grain boundary coating layer may be along the interface between the first primary particles inside the first particle PTC1. For example, the grain boundary coating layer may refer to a material coated on the grain boundary in the first particle PTC1. The grain boundary coating layer may include carbon and/or a carbon-containing compound. The grain boundary coating layer may further include at least one selected from the group consisting of a titanium-containing compound, a magnesium-containing compound, and a vanadium-containing compound.

The interior of the first particle PTC1 according to one or more embodiments may refer to the entire (e.g., substantially entire) interior of the first particle PTC1 excluding the surface of the first particle PTC1. For example, the interior of the first particle PTC1 may refer to an entire (e.g., substantially entire) interior from a depth of about 10 nm from the surface of the first particle PTC1 or a region from a depth of about 10 nm to a depth of about 2 µm.

Because the first particle PTC1 may further include the grain boundary coating part, structural stability may be reinforced or enhanced, and a substantially uniform coating layer may be formed or provided on the surface of the first particle PTC1. In one or more embodiments, because the first particle PTC1 may further include the grain boundary coating part, the electrical conductivity of the first particle PTC1 may be further improved or enhanced.

The first particle PTC1 may further include carbon derived from the coating layer and/or grain boundary coating layer. The carbon content (e.g., amount) in the first particle PTC1 may be about 0.5 wt% to about 10 wt%, about 1 wt% to about 3 wt%, or about 1.5 wt% to about 2.5 wt%.

If (e.g., when) the first particle PTC1 is a secondary particle, the average particle diameter of the first particles PTC1 may be about 2 µm to about 15 µm, about 3 µm to about 10 µm, or about 3 µm to about 7 µm. For example, the average particle diameter of the first particles PTC1 may be about 5 µm. In one or more embodiments, the average particle diameter may be measured using a particle size analyzer. The average particle diameter may refer to the diameter (D50) of particles at an accumulated volume of about 50 vol% in particle size distribution.

The average size of the first primary particles may be about 200 nm or less. For example, the average size of the first primary particles may be about 10 nm to about 200 nm, about 20 nm to about 200 nm, about 50 nm to about 200 nm, or about 50 nm to about 150 nm. In one or more embodiments, the average particle size of the first primary particles may refer to a diameter measured by randomly selecting about 30 primary particles on an electron microscope image on the positive electrode active material. The size of the first primary particles may be substantially uniform.

If (e.g., when) the first particle PTC1 has a polycrystal form, the size of the first primary particle may be smaller than the size of the first particle PTC1 if (e.g., when) the first particle PTC 1 is in a single particle form. For example, the size of the first primary particle, if (e.g., when) the first particle PTC1 is a polycrystal form, may be smaller by about 100 nm than the size of the first primary particle if (e.g., when) the first particle PTC1 is a single crystal form.

If (e.g., when) the average particle diameter of the first particles PTC1 and the average size of the first primary particles satisfy or are in the foregoing ranges, and if (e.g., when) the size of the first primary particles is substantially uniform, the charge and discharge capacity and capacity (e.g., electrical capacity) at low temperature of a rechargeable lithium battery including the first particles PTC1 may be improved or enhanced.

The first particle PTC1 may have a spherical (e.g., substantially spherical) shape in which the first primary particles on the nanoscale are agglomerated. Because the first primary particles are closely (e.g., substantially closely) agglomerated in the first particle PTC1, properties may be shown as follows. The first particle PTC1 may have a spherical (e.g., substantially spherical) shape or an elliptical (e.g., substantially elliptical) shape. The average particle diameter (D50) of the first particles PTC1 may be about 2 µm to about 15 µm. The porosity of the first particles PTC1 may be about 20% to about 40%. Porosity may be defined as the pore volume divided by the total volume of a particle. The span value of the first particles PTC1 analyzed by a particle size analyzer may be about 0.3 to about 0.75.

In one or more embodiments, if (e.g., when) the first particle PTC1 is in a polycrystal form, its primary particles may be smaller compared to if (e.g., when) it is in a single crystal form, with a size difference of about 100 nm. If (e.g., when) the average particle diameter and the size of the primary particles fall within the ranges as described in one or more embodiments and are uniform (e.g., substantially uniform), the charge and discharge capacity, as well as the low-temperature performance of a rechargeable lithium battery, may be enhanced. The first particle PTC1, which may have a spherical (e.g., substantially spherical) or elliptical (e.g., substantially elliptical) shape, may be composed of closely agglomerated nanoscale primary particles. These particles typically may have an average diameter of about 2 µm to about 15 µm, a porosity of about 20% to about 40%, and a span value of about 0.3 to about 0.75. In this context, "closely agglomerated" refers to that the primary particles within the first particle PTC1 may be packed so tightly that there is minimal space between them, resulting in a compact and cohesive structure.

### Second Particle PTC2

The second particle PTC2 may include a lithium compound represented by Chemical Formula 2.

Chemical Formula 2 Liₐ₂Niₓ₂Mn_{y2}C_{z2}O_{c2}

In Chemical Formula 2, 1.1<a2≤1.6, 0.2≤x2≤0.5, 0.5≤5y2≤0.8, 0≤z2≤0.05 (e.g., 0.001≤z2≤0.05), 2≤c2≤2.3, x2 + y2 + z2 = 1, and C is at least one element selected from the group consisting of transition metals having an oxidation number of 4.

The second particles PTC2 are (e.g., be in) a single particle form substantially similar to the first particles PTC1 (when the first particles PTC1 have a single particle form). The illustration of the single particle may be substantially the same as or substantially similar to that on the first particles PTC1. In one or more embodiments, the second particle PTC2 may have a form constituted with one single particle. In one or more embodiments, the second particle PTC2 may have a form in which a plurality of single particles are attached to or coupled to each other. The positive electrode active material according to one or more embodiments may include the second particles PTC2 in a single particle form and may accomplish or provide the high capacity (e.g., electrical capacity) and high energy density of a rechargeable lithium battery.

In one or more embodiments, the second particle PTC2 may include a second coating layer on the surface of the second particle PTC2. By including the second coating layer, the second particle PTC2 may effectively or suitably suppress or reduce structural collapse (e.g., a degree or occurrence of structural collapse) due to repeated charging and discharging. In one or more embodiments, the lifetime characteristics of a rechargeable lithium battery may be improved or enhanced.

The second coating layer may include a boron-containing compound, an aluminium-containing compound, and/or a (e.g., any suitable) combination thereof. A metal-containing compound in the second coating layer may be, for example, a metal oxide, a metal hydroxide, a metal carbonate, a synthesized compound thereof, and/or a (e.g., any suitable) mixture thereof. The metal-containing compound may further include other suitable metal and/or nonmetal elements. For example, the second coating layer may further include lithium, manganese, and/or nickel.

A method for measuring the metal content (e.g., amount) in the second coating layer of the second particle PTC2 may include performing scanning electron microscopy-energy dispersive X-ray spectroscopy (SEM-EDS) on the second particles PTC2. Through the analysis, the boron and/or aluminium contents (e.g., amounts) in the second coating layer may be confirmed or measured. As a method for measuring the metal content (e.g., amount) in the second coating layer, an inductively coupled plasma-mass spectrometry (ICP-MS), an inductively coupled plasma optical emission spectroscopy (ICP-OES) and/or the like may be used in addition to the SEM-EDS.

In one or more embodiments of the present disclosure, cobalt (Co) may be substantially omitted (e.g., be free of Co) in the second particle PTC2. For example, the content (e.g., amount) of the cobalt (Co) of the second particle PTC2 may be about 100 ppm or less. In one or more embodiments, cobalt (Co) may also be substantially omitted in the first particle PTC1. By substantially omitting cobalt (Co) in the positive electrode active material according to one or more embodiments, a rechargeable lithium battery that is economical and has high capacity (e.g., electrical capacity) and operating voltage may be provided.

The average particle diameter of the second particles PTC2 may be about 1.5 µm to about 15 µm, about 1.5 µm to about 10 µm, or about 1.5 µm to about 6 µm. The average particle diameter of the second particles PTC2 may be greater than the average particle diameter of the first particles PTC1. The minimum particle diameter of the second particles PTC2, for example, the size of second primary particles, may be about 0.3 µm to about 1.5 µm or about 0.3 µm to about 1.0 µm. The size of the second primary particles may be greater than the size of the first primary particles. For example, a difference between the size of the second primary particles and the size of the first primary particles may be about 200 nm or more.

In one or more embodiments, the average particle diameter may be measured by a particle size analyzer. The average particle diameter may refer to the diameter (D50) of particles at an accumulated volume of about 50 vol% in particle size distribution.

In one or more embodiments, the minimum particle diameter, for example, the size of the second primary particles, may refer to a diameter measured by randomly selecting about 30 primary particles in an electron microscope image on the second particles PTC2.

In one or more embodiments of the present disclosure, the second particles PTC2 may have or be in a secondary particle form in which primary particles are agglomerated. In one or more embodiments, the second particle PTC2 may have a granular (e.g., substantially granular) or spherical (e.g., substantially spherical) shape, and the average particle diameter of the second particles PTC2 may be about 10 µm to about 30 µm, about 10 µm to about 20 µm, or about 10 µm to about 15 µm.

In one or more embodiments of the present disclosure, the second particles PTC2 may be present in a mixture form of a compound having (e.g., being in) a single particle form and a compound having (e.g., being in) a secondary particle form.

Referring to FIGS. 6 and 7, the positive electrode active material according to one or more embodiments of the present disclosure will be described in more detail. The positive electrode active material of the present disclosure includes first particles PTC1 and second particles PTC2. The mixing ratio of the first particles PTC1 and the second particles PTC2 in the positive electrode active material may be about 90:10 to about 70:30 or about 80:20 to about 70:30. In one or more embodiments, the content of the second particles may be about 20 parts by weight to about 30 parts by weight based on 100 parts by weight of the positive electrode active material.

The second particle PTC2 may be a lithium-rich manganese-based oxide (LMR) containing excessive lithium and may have a mixed structure of a layered phase (LiMO₂) and a rock salt phase (Li₂MnO₃). During the charge and discharge process, the rock salt phase may be activated, and high capacity (e.g., electrical capacity) may be achieved by additionally developing capacity (e.g., electrical capacity) through an oxygen redox reaction. In the positive electrode active material according to one or more embodiments of the present disclosure, the first particles PTC1 and the second particles PTC2 may be mixed in an appropriate or suitable ratio, and capacity (e.g., electrical capacity) and operating voltage may be improved or enhanced compared to a lithium manganese iron phosphate (LMFP) battery that is generally available or generally used.

The compound of Chemical Formula 2 (e.g., lithium-rich manganese-based oxide) may have lower electrical conductivity compared to the compound of Chemical Formula 1. In one or more embodiments, the second particles are used as single particles, and electrical conductivity and energy density may be improved or enhanced.

The first particles PTC1 may have advantages or features of long lifetime, high stability (e.g., structural or chemical stability), and excellent or suitable low-temperature properties (e.g., electrical properties). Because the first particles PTC1 that are structurally stable are used as the main or predominant material of the positive electrode active material, relatively low stability and lifetime of the second particles PTC2 may be compensated or provided. In one or more embodiments, because the first particles PTC1 are used as a main or predominant active material, excellent or suitable low-temperature properties (e.g., electrical properties) may be achieved or provided.

In one or more embodiments, the second particle PTC2, e.g., a lithium-rich manganese-based oxide (LMR), may have a mixed structure of a layered phase (LiMO₂) and a rock salt phase (Li₂MnO₃). During charge and discharge, the rock salt phase may activate, enhancing capacity (e.g., electrical capacity) through an oxygen redox reaction. If (e.g., when) combined with the first particles PTC1 in an appropriate or suitable ratio, the overall capacity and operating voltage of the battery may improve or enhance compared to lithium manganese iron phosphate (LMFP) batteries that are generally available or generally used. Although the lithium-rich manganese-based oxide may have lower electrical conductivity than other compounds, using the second particles as single particles may enhance electrical conductivity and energy density. The first particles PTC1 may offer or provide long lifetime, high stability (e.g., structural or chemical stability), and excellent or suitable low-temperature properties, compensating for the lower stability and lifetime of the second particles PTC2. Thus, using the first particles PTC1 as the main or predominant active material may ensure excellent or suitable low-temperature performance and overall rechargeable lithium battery stability (e.g., structural or chemical stability).

A rechargeable lithium battery including the positive electrode active material according to one or more embodiments of the present disclosure may have an excellent or suitable average voltage. In one or more embodiments, the average voltage of the rechargeable lithium battery according to one or more embodiments of the present disclosure may be about 3.5 V to about 4.5 V. For example, an operating voltage range may be about 3.5 V to about 3.7 V or about 3.6 V to about 3.65 V.

The rechargeable lithium battery including the positive electrode active material according to one or more embodiments of the present disclosure may have excellent or suitable lifetime characteristics. In one or more embodiments, the rechargeable lithium battery according to one or more embodiments of the present disclosure may have capacity (e.g., electrical capacity) retention of about 95% or more after charging and discharging 50 times with constant current of about 0.1 C at the voltage. For example, the capacity (e.g., electrical capacity) retention may be about 97% to about 100% or about 98% to about 100%.

The positive electrode active material according to one or more embodiments of the present disclosure may improve or enhance mixture pellet density and energy density. In one or more embodiments, the pellet density of the positive electrode active material according to one or more embodiments of the present disclosure may be about 2 g/cc to about 3 g/cc, about 2.4 g/cc to about 2.6 g/cc, about 2.6 g/cc to about 2.8 g/cc, or about 2.6 g/cc to about 2.9 g/cc.

The rechargeable lithium battery including the positive electrode active material according to one or more embodiments of the present disclosure may improve or enhance positive electrode utilization and energy density. The positive electrode utilization may be a value obtained by dividing the capacity (mAh) of the rechargeable lithium battery by the mass (g) of the positive electrode active material contained in the rechargeable lithium battery. In one or more embodiments, the positive electrode utilization may be about 130 mAh/g or more, about 140 mAh/g or more, or about 150 mAh/g or more. The rechargeable lithium battery according to one or more embodiments of the present disclosure may have the positive electrode utilization of about 200 mAh/g or less.

The rechargeable lithium battery including the positive electrode active material according to one or more embodiments of the present disclosure may improve or enhance capacity per volume and energy density. The capacity per volume may be the positive electrode utilization (mAh/g) of a rechargeable lithium battery multiplied by the positive electrode active material density (g/cc). In one or more embodiments, the rechargeable lithium battery according to one or more embodiments of the present disclosure may have the capacity per volume of about 300 mAg/cc or more, 350 mAg/cc or more, or 390 mAg/cc or more. The rechargeable lithium battery according to one or more embodiments of the present disclosure may also have the capacity per volume of about 500 mAg/cc or less.

### Method for Preparing Positive Electrode Active Material

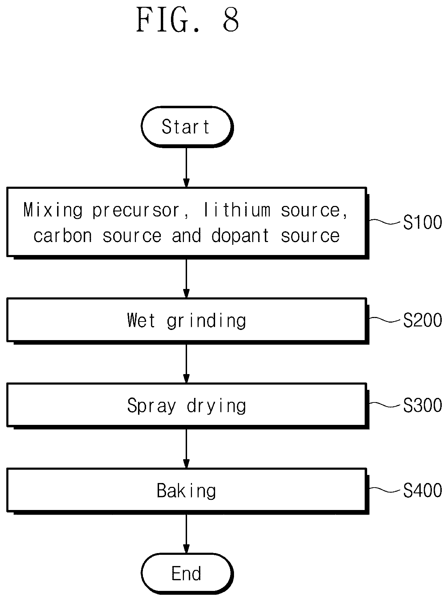

FIG. 8 is a flowchart illustrating a method for preparing a positive electrode active material according to one or more embodiments of the present disclosure. A method for preparing the first particles PTC1 according to one or more embodiments of the present disclosure will be described in more detail with reference to FIG. 8.

A manganese iron phosphate precursor, a lithium source, a carbon source, and a dopant source may be added to a solvent and mixed (S100). For example, the solvent may be water, ethanol, and/or the like. The manganese iron phosphate precursor may be a compound containing manganese (Mn), iron (Fe), and phosphorus (P) simultaneously, and/or a (e.g., any suitable) mixture of a compound containing manganese (Mn) and a compound containing iron (Fe) and/or phosphorus (P). For example, the manganese iron phosphate precursor may include MnₓFe₁₋ₓPO₄·H₂O, a mixture of MnCO₃ and FePO₄·H₂O, and/or a (e.g., any suitable) mixture of MnCO₃, FeSO₄ and H₃PO₄. Here, x may be about 0.3 to about 0.7.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include an oxide containing a dopant metal and/or a chloride containing a dopant metal. For example, the dopant source may include at least one selected from among the oxide or chloride of Mg and V of Chemical Formula 1 and at least one selected from among the oxide of Ti or the chloride of Ti. For example, at least one selected from among the oxide of Mg and V or the chloride of Mg and V and at least one selected from among the oxide of Ti or the chloride of Ti may be included.

The mixture may be subjected to wet grinding (S200). The wet grinding may be performed by using a wet mill capable of controlling temperature that is generally used or generally available. For example, the wet grinding may use at least one selected from the group consisting of a bead mill, a ball mill, an attrition mill, an apex mill, a super mill, and a basket mill. Through the wet grinding process, the particles in the mixture may be ground to a substantially fine size.

In one or more embodiments of the present disclosure, the wet grinding (S200) may not be provided. For example, in order to maximize or increase the average particle diameter of the first particles PTC1 to be finally prepared, the wet grinding (S200) with respect to the precursor particles may not be provided.

A dried (e.g., substantially dried) mixture may be formed or provided by removing the solvent (e.g. by evaporating the solvent) from the mixture (S300).

In one or more embodiments of the present disclosure, during forming the first particles PTC1 in FIG. 6, the formation of the dried (e.g., substantially dried) mixture may include performing a direct evaporation method with respect to the mixture. For example, the direct evaporation method may include static drying and/or spray drying.

In one or more embodiments of the present disclosure, during forming the first particles PTC1 in FIG. 7, the formation of the dried (e.g., substantially dried) mixture may include performing spray drying of the mixture. The spray drying may use a spray drying device that is generally used or generally available. For example, the spray drying may use at least one selected from among an ultrasonic spray drying device, an air nozzle spray drying device, an ultrasonic nozzle spray drying device, a filter expansion droplet generation device, and a static spray drying device.

The fine (e.g., substantially fine) particles in the size of the primary particles by the wet grinding process may be agglomerated with each other through the spray drying process to form secondary particles. In one or more embodiments, by controlling the flow amount, flow rate, temperature, and/or retention time in the reactor of the carrier gas, and/or internal pressure in the spray drying process, the first particles PTC1 may be formed into a secondary particle form having a desired or suitable size.

In one or more embodiments, the mixture that is a target for spray drying may have the total solid content (e.g., amount) of about 20% to about 40%. The total solid content (e.g., amount) may refer to a converted value to a percentage of the weight of solid materials (e.g., dried (e.g., substantially dried) mixture) remain after evaporating the solvent based on the total weight of the mixture (e.g., spray solution). In one or more embodiments, the spray solution may have the total solid content (e.g., amount) of about 30 wt%.

If (e.g., when) the total solid content (e.g., amount) is less than about 20%, the average particle diameter of the first particles PTC1 may decrease, and defects of reducing productivity may occur. If (e.g., when) the total solid content (e.g., amount) is greater than about 40%, the control of the average particle diameter of the first particles PTC1 may become difficult, and the deviation in the size of the first particles PTC1 may increase.

The spray solution according to one or more embodiments may have a viscosity of about 1500 mPa·s to about 2500 mPa·s with the total solid content (e.g., amount). For example, the spray solution may have a viscosity of about 2000 mPa·s.

In one or more embodiments, the injection amount of the spray drying may be about 0.1 kg/min to about 0.9 kg/min. The injection amount of the spray drying may be defined as the weight of the total solid content (e.g., amount) in the spray solution injected per time. For example, if (e.g., when) about 1 kg of the spray solution having the total solid content (e.g., amount) of about 20% is injected for about 1 minute, the injection amount may be about 0.2 kg/min. In one or more embodiments, the injection amount of the spray drying according to one or more embodiments may be about 0.5 kg/min.

In one or more embodiments, the spray drying may be performed at a temperature of about 100 °C to about 300 °C. For example, the spray drying may be performed at a temperature of about 200 °C to about 300 °C or about 230 °C to about 270 °C. The spray gas (for example, air) used in the spray drying may be injected at a first temperature and exhausted at a second temperature. For example, the first temperature may be about 200 °C to about 250 °C. The second temperature may be about 80 °C to about 150 °C.

The injection pressure of the spray solution may be about 0.3 MPa to about 0.7 MPa. For example, the injection pressure of the spray solution may be about 0.5 MPa.

If (e.g., when) the injection amount, injection pressure, and temperature of the spray drying satisfy the foregoing ranges, the first particles PTC1 may have a spherical (e.g., substantially spherical) shape and desired or suitable porosity.

The flow rate of the spray solution in the spray drying may be about 30 mL/min to about 80 mL/min. If (e.g., when) the flow rate is less than about 30 mL/min, defects of nozzle blocking phenomenon and productivity degradation may occur. If (e.g., when) the flow rate is greater than about 80 mL/min, defects of incomplete drying of the mixture may occur due to moisture condensation in a spray drier. The injection pressure of the spray solution may be about 0.3 MPa to about 0.7 MPa. For example, the injection pressure of the spray solution may be about 0.5 MPa.

The dried (e.g., substantially dried) mixture may be baked (e.g., undergo thermal treatment) under an inert atmosphere (S400). The inert atmosphere may be a nitrogen atmosphere and/or an argon atmosphere. The temperature of the baking process (e.g., thermal treatment) may be about 500 °C to about 1000 °C or about 600 °C to about 800 °C. The performance time of the baking process (e.g., thermal treatment) may be about 4 hours to about 20 hours or about 6 hours to about 12 hours. Through the baking (e.g., thermal treatment) of the dried (e.g., substantially dried) mixture, the first particles PTC1 including the compound of Chemical Formula 1 may be formed.

A method for preparing the second particles PTC2 according to one or more embodiments of the present disclosure will be described in more detail. The second particles PTC2 containing a lithium-rich manganese-based oxide (hereinafter, referred to as LMR) may be prepared by mixing a transition metal precursor and a lithium source and baking (e.g., then subjecting the mixture to thermal treatment).

The transition metal precursor may be in the form of a hydroxide, an oxide, and/or a carbonate. A precursor having a carbonate form may be used in consideration of preparing a positive electrode active material having a relatively high specific surface area.

The transition metal precursor may be prepared through a co-precipitation process. For example, the transition metal precursor may be prepared by dissolving each transition metal-containing raw material in a solvent to prepare a metal solution, mixing the metal solution, an ammonium cation complex forming agent, and an alkaline compound, and performing a co-precipitation reaction. In one or more embodiments, an oxidizing agent and/or an oxygen gas may be additionally injected during the co-precipitation reaction.

In one or more embodiments, the transition metal-containing raw material may be an acetate, a carbonate, a nitrate, a sulfate, a halide, and/or a sulfate of each transition metal. For example, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄ MnCO₃, Mn(NO₃)₂, MnSO₄ H₂O, manganese acetate, manganese halide, and/or the like.

The ammonium cation complex forming agent may be at least one or more selected from the group consisting of NH₄OH, (NH₄)₂SO₄, NH₄NO₃, NH₄Cl, CH₃COONH₄, and NH₄CO₃.

The alkaline compound may be at least one or more selected from the group consisting of NaOH, Na₂CO₃, KOH, and Ca(OH)₂. According to the type (kind) of the alkaline compound used, the type (kind) of the precursor may change. For example, if (e.g., when) NaOH is used as the alkaline compound, a precursor in a hydroxide type (kind) may be obtained, and if (e.g., when) Na₂CO₃ is used as the alkaline compound, a precursor in a carbonate type (kind) may be obtained. In one or more embodiments, if (e.g., when) the alkaline compound is used together with an oxidizing agent, a precursor in an oxide type (kind) may be obtained.

The lithium source may be obtained by substantially the same method as or substantially similar method to the preparation method of the first particles PTC1.

The transition metal precursor and the lithium source may be mixed in amounts such that the molar ratio of the total transition metal (Ni+Mn):Li may be about 1:1.05 to about 1:2, about 1:1.1 to about 1:1.8, or about 1:1.3 to about 1:1.8.

The mixture of the transition metal precursor and the lithium source may be subjected to wet grinding (S200). The wet grinding may be substantially the same as or substantially similar to that in the preparation method of the first particles PTC1.

By removing the solvent (e.g., by evaporating the solvent) from the mixture of the transition metal precursor and the lithium source, a dried (e.g., substantially dried) mixture may be formed or provided (S300). The drying may be substantially the same as or substantially similar to that in the preparation method of the first particles PTC1.

The dried (e.g., substantially dried) mixture under an inert atmosphere may be baked (e.g., heat treatment) (S400). The baking (e.g., thermal treatment) may be substantially the same as or substantially similar to that in the preparation method of the first particles PTC1.

The first particles PTC1 and the second particles PTC2, respectively prepared by the foregoing methods, may be mixed to prepare the positive electrode active material according to one or more embodiments. The mixing may be conducted so that the content (e.g., amount) of the first particles PTC1 may be about 70 wt% to about 90 wt% based on the sum of 100 wt% of the content (e.g., amount) of the first particles PTC1 and the content (e.g., amount) of the second particles PTC2. For example, the mixing may be conducted so that the content (e.g., amount) of the first particles PTC1 may be about 70 wt% to about 85 wt% or about 70 wt% to about 80 wt% based on the sum of 100 wt% of the content (e.g., amount) of the first particles PTC1 and the content (e.g., amount) of the second particles PTC2.

Carbon element analysis according to one or more embodiments of the present disclosure may be performed by an Elementar Micro Cube elemental analyzer. For example, the set operation method and conditions are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide may be detected using a thermal conductivity detector (TCD).

In the method for measuring the carbon content (e.g., amount) according to one or more embodiments of the present disclosure, scanning electron microscopy-energy dispersive X-ray spectroscopy (SEM-EDS) was performed with respect to the surface of the particles, and quantitative analysis was performed. As the method for measuring the carbon content (e.g., amount), an inductively coupled plasma-mass spectrometry (ICP-MS), an inductively coupled plasma optical emission spectroscopy (ICP-OES) and/or the like may be used in addition to the SEM-EDS.

Hereinafter, embodiments of the present disclosure will be described in more detail with reference to Examples and Comparative Examples. However, the following examples are only examples of the present disclosure, and embodiments of the present disclosure are not limited to the following examples.

### Preparation Example 1: Preparation of First Particles in The Single Particle Form

A Mn_{0.6}Fe_{0.4}PO₄ iron phosphate precursor, lithium carbonate, and titanium dioxide were mixed in a molar ratio of about 1:1.03:0.004. To the mixture, 10 wt% of glucose was added. A wet grinding process was performed by ball milling with respect to the mixture. The mixture was evaporated and dried (e.g., substantially dried) in a heating furnace tray, and put in a vacuum oven for drying at about 120 °C for about 4 hours. The dried (e.g., substantially dried) mixture was baked (e.g., thermal treatment) under a nitrogen atmosphere at about 750 °C for about 10 hours. The baked product was ground to obtain first particles in a single particle form. The average size of the primary particles in the first particles was about 100 nm to about 200 nm.

### Preparation Example 2: Preparation of First Particles in The Secondary Particle Form

A Mn_{0.6}Fe_{0.4}PO₄ iron phosphate precursor, lithium carbonate, and titanium dioxide were mixed in a molar ratio of about 1:1.03:0.004. To the mixture, 10 wt% of glucose was added. A mixture that was a slurry was evaporated and dried (e.g., substantially dried) by spray drying with a spray pressure of about 0.5 MPa at temperature conditions of about 230 °C. The dried (e.g., substantially dried) mixture was baked (e.g., thermal treatment) under a nitrogen atmosphere at about 750 °C for about 10 hours to obtain first particles in a secondary particle form. The average size of the primary particles in the first particles was about 50 nm to about 150 nm.

### Preparation Example 3: Preparation of Second Particles in The Single Particle Form

Ni_{0.25}Mn_{0.75}(OH)₂ and LiOH were mixed such that the molar ratio of Li/(Ni+Mn) was about 1.5, and then heated under an oxygen atmosphere at about 950 °C for about 24 hours to prepare a second positive electrode active material in a single particle form, including a lithium-rich manganese composite oxide (Li_{1.5}Ni_{0.25}Mn_{0.75}O₂) and having an average particle diameter (D50) of about 2 µm.

In one or more embodiments, Preparation Example 1 describes the formation of first particles in a single particle form by mixing Mn_{0.6}Fe_{0.4}PO₄, lithium carbonate, and titanium dioxide with glucose, followed by wet grinding, drying, and baking under nitrogen at 750 °C. The primary particles in the resulting first particles are 100-200 nm in size. Preparation Example 2 outlines the formation of first particles in a secondary particle form using a similar mixture, but with spray drying and baking, resulting in primary particles of 50-150 nm. Preparation Example 3 details the preparation of second particles in a single particle form by mixing Ni_{0.25}Mn_{0.75}(OH)₂ and LiOH, then heating under oxygen at 950 °C to produce particles with an average diameter of about 2 µm.

### Examples 1 to 6 and Comparative Examples 1 to 6: Preparation of Mixed Positive Electrode Active Materials

### Example 1

A positive electrode active material was prepared by mixing the first particles of Preparation Example 1 and the second particles of Preparation Example 3 in a weight ratio of about 80:20.

### Example 2

A positive electrode active material was prepared by mixing the first particles of Preparation Example 1 and the second particles of Preparation Example 3 in a weight ratio of about 75:25.

### Example 3

A positive electrode active material was prepared by mixing the first particles of Preparation Example 1 and the second particles of Preparation Example 3 in a weight ratio of about 70:30.

### Example 4

A positive electrode active material was prepared by mixing the first particles of Preparation Example 2 and the second particles of Preparation Example 3 in a weight ratio of about 80:20.

### Example 5

A positive electrode active material was prepared by mixing the first particles of Preparation Example 2 and the second particles of Preparation Example 3 in a weight ratio of about 75:25.

### Example 6

A positive electrode active material was prepared by mixing the first particles of Preparation Example 2 and the second particles of Preparation Example 3 in a weight ratio of about 70:30.

### Comparative Example 1

A positive electrode active material was prepared by mixing the first particles of Preparation Example 1 and the second particles of Preparation Example 3 in a weight ratio of about 95:5.

### Comparative Example 2

A positive electrode active material was prepared by mixing the first particles of Preparation Example 1 and the second particles of Preparation Example 3 in a weight ratio of about 85:15.

### Comparative Example 3

A positive electrode active material was prepared by mixing the first particles of Preparation Example 1 and the second particles of Preparation Example 3 in a weight ratio of about 65:35.

### Comparative Example 4

A positive electrode active material was prepared by mixing the first particles of Preparation Example 2 and the second particles of Preparation Example 3 in a weight ratio of about 95:5.

### Comparative Example 5

A positive electrode active material was prepared by mixing the first particles of Preparation Example 2 and the second particles of Preparation Example 3 in a weight ratio of about 85:15.

### Comparative Example 6

A positive electrode active material was prepared by mixing the first particles of Preparation Example 2 and the second particles of Preparation Example 3 in a weight ratio of about 65:35.

### Manufacture of A Positive Electrode

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied on an aluminium current collector, dried (e.g., substantially dried) and rolled to manufacture a positive electrode.

### Fabrication of A Rechargeable Lithium Battery

A 2032 type (kind) coin half-cell was formed using the positive electrode prepared and a lithium metal counter electrode as the counter electrode. A separator (thickness: about 16 µm) composed of a porous polyethylene (PE) film was arranged between the positive electrode and the lithium metal counter electrode, and an electrolyte solution was injected to fabricate a rechargeable lithium battery. As the electrolyte, an electrolyte solution obtained by mixing 1.3 M LiPF₆ with a mixture solvent of ethylene carbonate (EC) : diethyl carbonate (DEC) : fluoroethylene carbonate (FEC) (volume ratio of about 2:6:2) was used.

### Evaluation Example 1: Analysis on the Surface of Positive Electrode Active Material

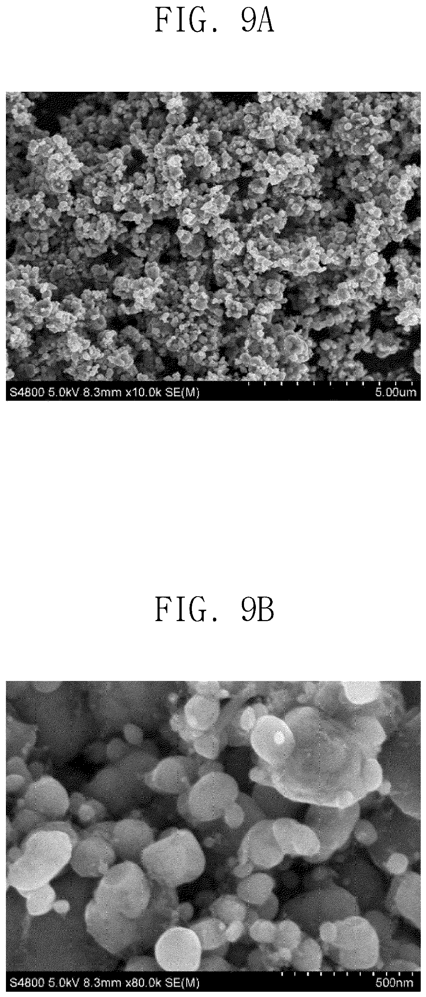

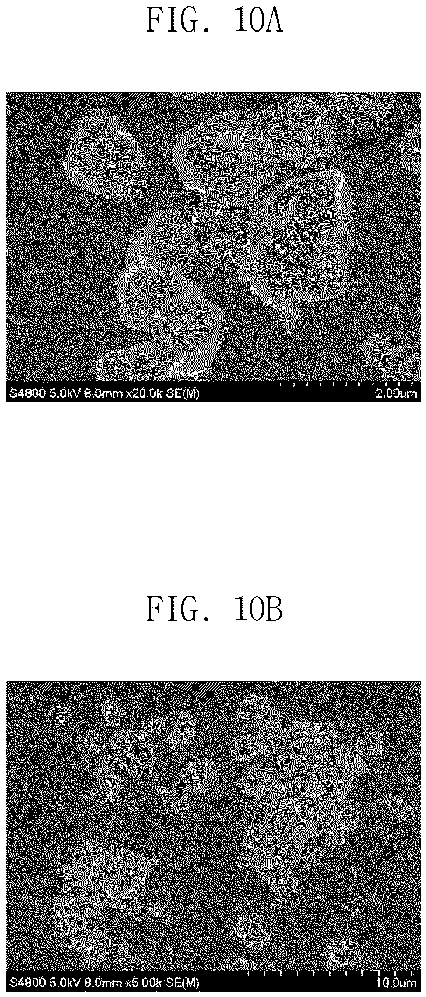

The scanning electron microscope (SEM) images of the first particles prepared in Preparation Examples 1 and 2 are shown in FIGS. 9A to 9D. The SEM images of the second particles prepared in Preparation Example 3 are shown in FIGS. 10A and 10B.

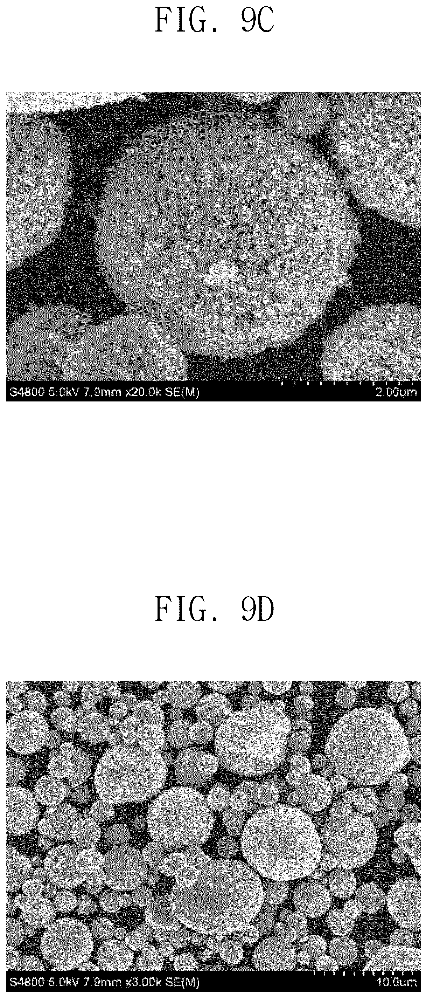

Referring to FIGS. 9A and 9B, it can be confirmed that the first particles according to Preparation Example 1 of the present disclosure have (e.g., are in) a fine (e.g., substantially fine) single particle form with a nano size. Referring to FIGS. 9C and 9D, it can be confirmed that the first particles according to Preparation Example 2 of the present disclosure have (e.g., are in) a spherical (e.g., substantially spherical) secondary particle form, in which primary particles are agglomerated. In one or more embodiments, it can be confirmed that the primary particles of Preparation Example 2 have small particle sizes and are substantially uniform compared to the primary particles of Preparation Example 1.

Referring to FIGS. 10A and 10B, it can be confirmed that the second particles have (e.g., are in) a single particle form or a form in which a plurality of single particles are attached to each other.

### Evaluation Example 2: Evaluation of Active Material

The average pellet density (PD) of the positive electrodes for Examples 1 to 6 and Comparative Examples 1 to 6 is shown in Table 1. The average pellet density was measured by putting 3 g of a positive electrode active material in a pellet mold and applying a force of about 4.0 US tons for about 30 seconds.

**Table 1**

| | Powder | | |
|---|---|---|---|
| | First particles (wt%) | Second particles (wt%) | PD (g/cc) |
| Example 1 | 80% | 20% | 2.56 |
| Example 2 | 75% | 25% | 2.60 |
| Example 3 | 70% | 30% | 2.62 |
| Example 4 | 80% | 20% | 2.62 |
| Example 5 | 75% | 25% | 2.64 |
| Example 6 | 70% | 30% | 2.66 |
| Comparative Example 1 | 95% | 5% | 2.42 |
| Comparative Example 2 | 85% | 15% | 2.55 |
| Comparative Example 3 | 65% | 35% | 2.62 |
| Comparative Example 4 | 95% | 5% | 2.48 |
| Comparative Example 5 | 85% | 15% | 2.61 |
| Comparative Example 6 | 65% | 35% | 2.67 |

Referring to Table 1, it can be confirmed that the positive electrode active materials according to Examples 1 to 6 have substantially similar or higher pellet density compared to the positive electrode active materials according to Comparative Examples 1 to 6. For example, it can be confirmed that the positive electrode active materials according to Examples 4 to 6 have high pellet density of about 2.6 g/cc or more.

### Evaluation Example 3: Evaluation of Battery Properties

The properties of the rechargeable lithium batteries fabricated using the positive electrode active materials of Examples 1 to 6 and Comparative Examples 1 to 6 were evaluated.

The rechargeable lithium batteries were initially charged under constant current (about 0.2 C) and constant voltage (about 4.25 V) conditions, and after resting for about 10 minutes, discharged under constant current (about 0.2 C) conditions until about 2.5 V to carry out initial charging and discharging. Then, charging and discharging were repeated 50 times with about 0.2 C/0.2 C. In addition, a coin cell was additionally formed, and -20 °C capacity was measured. The evaluation results of the battery properties are shown in Table 2.

**Table 2**

| | 4.25 V Charge amount (mAh/g) | 4.25 V Discharge amount (mAh/g) | 4.25 V Efficiency (%) | -20 °C Discharge amount (mAh/g) | Average voltage (V) | 4.25 V Lifetime (%, 50 cyc) | Positive electrode utilization (mAh/g) | Capacity per volume (mAh/cc) |
|---|---|---|---|---|---|---|---|---|
| Example 1 | 175.3 | 152.0 | 86.7 | 80 | 3.62 | 96.0 | 148.2 | 379 |
| Example 2 | 183.3 | 156.9 | 85.6 | 79 | 3.62 | 96.0 | 152.8 | 397 |
| Example 3 | 191.4 | 161.7 | 84.5 | 77 | 3.62 | 96.0 | 151.0 | 396 |
| Example 4 | 177.7 | 155.8 | 87.7 | 85 | 3.62 | 98.5 | 150.2 | 394 |
| Example 5 | 185.6 | 160.7 | 86.6 | 84 | 3.62 | 98.5 | 154.8 | 409 |
| Example 6 | 193.5 | 165.5 | 85.6 | 82 | 3.62 | 98.5 | 153.0 | 407 |
| Comparative Example 1 | 151.1 | 137.3 | 90.8 | 88 | 3.60 | 96.5 | 138.9 | 336 |
| Comparative Example 2 | 167.2 | 147.1 | 87.9 | 82 | 3.62 | 96.3 | 144.8 | 369 |
| Comparative Example 3 | 206.7 | 171.5 | 83.0 | 76 | 3.62 | 95.7 | 146.0 | 383 |
| Comparative Example 4 | 154.0 | 141.1 | 91.6 | 93 | 3.60 | 99.1 | 140.9 | 349 |
| Comparative Example 5 | 169.8 | 150.9 | 88.9 | 87 | 3.62 | 98.7 | 146.8 | 383 |
| Comparative Example 6 | 208.5 | 175.3 | 84.1 | 80 | 3.62 | 98.1 | 148.0 | 395 |

Referring to Table 2, it can be confirmed that the positive electrode active materials according to Examples 1 to 6 have substantially similar charge and discharge properties, efficiency, average voltage, and lifetime compared to the positive electrode active materials according to Comparative Examples 1 to 6.

In one or more embodiments, it can be confirmed that the positive electrode active materials according to Examples 1 to 6 have better positive electrode utilization and capacity per volume compared to the positive electrode active materials according to Comparative Examples 1 to 6. For example, it can be confirmed that the positive electrode active materials according to Examples 5 and 6 exhibit markedly high positive electrode utilization and capacity per volume.

For example, it can be confirmed that the rechargeable lithium batteries fabricated by using the positive electrode active materials according to Examples 1 to 6 have higher capacity per volume, while having substantially similar lifetime and average voltage compared to the rechargeable lithium batteries fabricated by using the positive electrode active materials according to Comparative Examples 1 to 6.

A positive electrode active material according to one or more embodiments of the present disclosure may have improved or enhanced mixture density, capacity (e.g., electrical capacity), and energy density by mixing the base of olivine-based first particles and second particles having high capacity (e.g., electrical capacity). A rechargeable lithium battery according to one or more embodiments of the present disclosure may have a relatively high operating voltage.

In the context of the present application and unless otherwise defined:

Single particle form: The single particle refers to an individual particle that exists alone without aggregation or agglomeration. This form has a monolithic structure, indicating that it is a single, unitary structure without grain boundaries. The single particle may be a single crystal or contain a few crystals, and it may exist as an independent phase where particles do not aggregate or not agglomerated with each other. In one or more embodiments, the single particle may include primary particles that are not aggregated or not agglomerated. The average particle diameter of the single particle may range from about 0.5 µm to about 2.5 µm, with primary particles sized about 100 nm to about 200 nm.

Secondary particle form: The secondary particle refers to a particle formed by the aggregation or agglomeration of multiple primary particles. This form has a polycrystal structure, indicating that it is composed of multiple primary particles aggregated or agglomerated together. The secondary particle may have a spherical (e.g., substantially spherical) or oval (e.g., substantially oval) shape and may include a coating layer that enhances structural stability and electrical conductivity. The average particle diameter of the secondary particle may range from about 3 µm to about 10 µm, with primary particles sized about 50 nm to about 200 nm.

In one or more embodiments, a single particle form refers to an individual, non-aggregated or non-agglomerated particle that may include primary particles (e.g., may be primary particles) and may have a random (e.g., amorphous) shape, while a secondary particle form may involve multiple primary particles aggregated or agglomerated together.

A battery manufacturing device, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

Although one or more embodiments of the present disclosure have been described, it should be understood that the present disclosure should not be limited to these embodiments but one or more suitable changes and modifications can be made by one ordinary skilled in the art within the scope of the present disclosure as hereinafter claimed and equivalents thereof.

## Claims

1. A positive electrode active material, comprising:
first particles comprising a compound of Chemical Formula 1; and
second particles comprising a compound of Chemical Formula 2,
wherein the content of the first particles is greater than the content of the second particles, and
the second particles are in a single particle form:
Chemical Formula 1 Liₐ₁Mnₓ₁Fe_{y1}B_{z1}PO_{4-c1}, and
in Chemical Formula 1, 0.8≤a1≤1.2, 0.3≤x1≤0.7, 0.3≤y1≤0.7, 0≤z1≤0.05, 0≤c1≤0.05, x1 + y1 + z1 = 1, and B is at least one element selected from the group consisting of Ti, Mg and V,
Chemical Formula 2 Liₐ₂Niₓ₂Mn_{y2}C_{z2}O_{c2}, and
in Chemical Formula 2, 1.1<a2≤1.6, 0.2≤x2≤0.5, 0.5≤5y2≤0.8, 0≤z2≤0.05, 2≤c2≤2.3, x2 + y2 + z2 = 1, and C is at least one element selected from the group consisting of transition metals having an oxidation number of 4.

2. The positive electrode active material as claimed in claim 1, wherein the content of the second particles is about 20 parts by weight to about 30 parts by weight based on 100 parts by weight of the positive electrode active material.

3. The positive electrode active material as claimed in claim 1 or claim 2, wherein the B is Ti.

4. The positive electrode active material as claimed in any one of claims 1 to 3, wherein an average size of first primary particles of the first particles is smaller than an average size of second primary particles of the second particles.

5. The positive electrode active material as claimed in any one of claims 1 to 4,
wherein the first particles comprise a first coating layer containing carbon, and
the carbon content in the first particles is about 1.5 wt% to about 2.5 wt%.

6. The positive electrode active material as claimed in any one of claims 1 to 5,
wherein the first particles are in a single particle form,
a first average particle diameter of the first particles is about 0.5 µm to about 2.5 µm, and
an average size of first primary particles of the first particles is about 100 nm to about 200 nm.

7. The positive electrode active material as claimed in any one of claims 1 to 5,
wherein the first particles comprise a plurality of first primary particles that are agglomerated with each other,
a first average particle diameter of the first particles is about 3 µm to about 10 µm, and
an average size of the plurality of first primary particles is about 50 nm to about 150 nm.

8. The positive electrode active material as claimed in claim 7,
wherein the first particles further comprise a grain boundary coating layer on an interface between the plurality of first primary particles, and
the grain boundary coating layer comprises carbon.

9. The positive electrode active material as claimed in claim 7 or claim 8,
wherein a porosity of the first particles is about 20% to about 40%.

10. The positive electrode active material as claimed in any one of claims 7 to 9, wherein a span value of the first particles, analyzed by a particle size analyzer, is about 0.3 to about 0.75.

11. The positive electrode active material as claimed in any one of claims 1 to 10,
wherein an average size of second primary particles of the second particles is about 0.3 µm to about 1.5 µm, and
a second average particle diameter of the second particles is about 1.5 µm to about 6 µm.

12. The positive electrode active material as claimed in any one of claims 1 to 11,
wherein the second particles comprise a second coating layer, and
the second coating layer comprises a boron-containing compound, an aluminium-containing compound, or a combination thereof.

13. The positive electrode active material as claimed in any one of claims 1 to 12, wherein a pellet density of the positive electrode active material is about 2.6 g/cc to about 2.9 g/cc.

14. A positive electrode, comprising:
a positive electrode current collector; and
a positive electrode active material layer on the positive electrode current collector,
wherein the positive electrode active material layer comprises the positive electrode active material as claimed in any one of claims 1 to 13, a conductive material, and a binder, and
wherein the positive electrode is a positive electrode for a rechargeable battery.

15. The positive electrode as claimed in claim 14, wherein the binder content is about 0.5 parts by weight to about 5 parts by weight based on 100 parts by weight of the positive electrode active material layer.
